# EUROPÄISCHE PATENTSCHRIFT

(11) **EP 2 328 703 B1**
(45) Veröffentlichungstag und Bekanntmachung des Hinweises auf die Patenterteilung: **01.02.2017**
(21) Anmeldenummer: 09777793.2
(22) Anmeldetag: 10.08.2009
(51) Int. Cl.: B23B 31/02

(54) **SCHRUMPFFUTTER MIT DEHNUNGSNUTEN**
SHRINK FIT CHUCK HAVING EXTENSION GROOVES
MANDRIN À RETRAIT AVEC RAINURES D'EXPANSION

(30) Priorität: 28.08.2008 DE 102008045233
(43) Veröffentlichungstag der Anmeldung: 08.06.2011
(73) Patentinhaber: Franz Haimer Maschinenbau KG, 86568 Hollenbach-Igenhausen (DE)
(72) Erfinder: HAIMER, Franz, 86568 Igenhausen (DE); HAIMER, Joseph, 86568 Igenhausen (DE); REGAU, Bernhard, 86551 Unterwittelsbach (DE)
(74) Vertreter: Misselhorn, Hein-Martin
(86) Internationale Anmeldenummer: PCT/EP2009/005805
(87) Internationale Veröffentlichungsnummer: WO 2010/022858

(56) Entgegenhaltungen:
- JP-A- 2001 105 208
- JP-A- 2001 353 634
- US-A1- 2007 140 803

## Beschreibung

Die Erfindung betrifft einen Werkzeughalter gemäß dem Oberbegriff des Anspruchs 1 für ein um eine Drehachse drehbares Werkzeug, insbesondere in Form eines Bohrers, eines Fräsers oder eines Reibwerkzeugs. Es ist bekannt, den Schaft eines solchen Werkzeugs in einer ringförmigen, in sich geschlossenen, meist als Hülsenpartie ausgeführten Partie eines Werkzeughalters zu halten. Zu diesem Zweck weist die Hülsenpartie in ihrer Werkzeugaufnahmeöffnung eine zur Drehachse des Werkzeughalters konzentrische Passfläche auf, an der der Schaft des Werkzeugs im Presssitz festgesetzt werden kann.

Ein solcher Werkzeughalter ist aus der US 2007 140 803 A1 bekannt.

Die Hülsenpartie des Werkzeughalters kann durch Erwärmen so weit in radialer Richtung aufgeweitet werden, dass der kalte Schaft des Werkzeugs mit der Passfläche der Hülsenpartie in Eingriff oder außer Eingriff gebracht werden kann, also in die Hülsenpartie eingeschoben oder aus ihr herausgezogen werden kann. Sobald die Hülsenpartie wieder abgekühlt ist, stellt sich zwischen ihr und dem gegenüber der Passfläche der Hülsenpartie ein bestimmtes Übermaß aufweisenden Schaft des Werkzeugs ein Pressverbund ein. Mittels dieses Pressverbundes wird das Werkzeug zuverlässig in dem Werkzeughalter festgehalten (Schrumpftechnologie).

Insbesondere dort, wo in der Praxis besondere Anforderungen an die Steifigkeit gestellt werden, kommen Werkzeughalter zum Einsatz, deren Hülsenpartie dickwandig ausgeführt ist. Bei solchen Werkzeughaltern bereitet das Ausspannen der Werkzeuge immer wieder Probleme.

Um das Werkzeug zu gegebener Zeit wieder ausspannen zu können verwendet man in der Praxis regelmäßig eine induktive Heizeinrichtung, das heißt eine hochfrequente Induktionsspule, die auf der äußeren Umfangsfläche der Hülsenpartie Wirbelströme induziert, welche die Hülsenpartie von außen her erhitzen. Der Schaft des auszuspannenden Werkzeugs wird dabei abgeschirmt, so dass er nicht selbst erhitzt wird. Gerade bei hohen Frequenzen tritt der sog. Skin-Effekt auf, das heißt die wärmeerzeugenden Wirbelströme werden wirklich nur knapp unter der Oberfläche der Hülsenpartie induziert. Die so unter der Oberfläche der äußeren Umfangsfläche der Hülsenpartie erzeugte Wärme dringt durch Wärmeleitung in Richtung der Mitte der Hülse vor, jedoch nur verzögert. Zu einem bestimmten Zeitpunkt hat sich die Hülsenpartie durch die in sie eingeleitete Wärme soweit aufgedehnt, dass der in diesem Augenblick noch kalte Schaft des Werkzeugs aus der Hülsenpartie herausgezogen werden kann, weil sich der bisher bestehende Presssitz infolge der Vergrößerung des Durchmessers der Hülsenpartie gelöst hat.

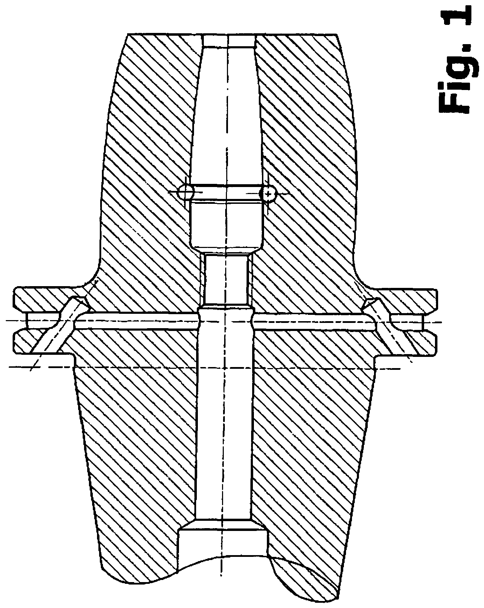

Mit zunehmender Dicke der Hülsenpartie in radialer Richtung treten hierbei jedoch Probleme auf. Je dicker eine Hülsenpartie in radialer Richtung ist, desto ungleichmäßiger wird sie erhitzt - es tritt irgendwann ein Stadium ein, in dem die Hülsenpartie im Bereich weit außen liegender Radien schon relativ stark erhitzt ist, während sie im Bereich weit innen liegender Radien noch nahezu kalt ist. Das führt zu relativ starken Wärmespannungen. Der sich nicht nur in radialer Richtung aufdehnende sondern auch bereits ganz erheblich in axialer Richtung längende Außenbereich der Hülsenpartie zeigt eine spürbare Tendenz die Hülsenpartie nach innen zu stülpen, sobald seine Längung in axialer Richtung durch den noch fast kalten Innenbereich zu stark behindert wird. Dies sieht (grob gezeichnet) in etwa so aus, wie das zum Zwecke der besseren Anschaulichkeit stark übertrieben durch die Figur 1 dargestellt wird

Diese unerwünschte Verformung der Hülsenpartie ist kontraproduktiv, da sie dazu führt, dass der Werkzeugschaft zunächst immer noch lokal durch die Passfläche eingeklemmt wird, obwohl sich die Hülsenpartie schon so weit gedehnt hat, dass ein großer Teil der Passfläche außer Eingriff mit dem Werkzeugschaft gekommen ist. Auf diese Art und Weise wird zumindest das Zeitfenster kleiner, in dem der Werkzeugschaft problemlos aus der Hülsenpartie herausgezogen werden kann. Das ist unerwünscht. Zudem muss unnötig viel Wärme auf die Hülsenpartie gegeben werden, um zu erzwingen, dass die Hülsenpartie sich soweit aufweitet, dass ihre Passfläche auch wirklich an allen Stellen außer Eingriff mit dem Werkzeugschaft kommt. Auch das ist unerwünscht.

Um diese Probleme zu vermeiden bemüht man sich in der Praxis darum, die Wandstärken der Hülsenpartien klein zu halten. Daher haben Standard-Schrumpffutter an ihrer Spitze nach DIN 69882-8 folgende Wandstärken (Maße in mm):

| Spann-Ø | Wandstärke |
|---|---|
| 6 | 7,5 |
| 8 | 6,5 |
| 10 | 7,0 |
| 12 | 6,0 |
| 14 | 6,5 |
| 16 | 5,5 |
| 18 | 7,5 |
| 20 | 6,5 |
| 25 | 9,5 |
| 32 | 6,0 |

Das deutsche Patent DE 102 44 759 befasst sich bereits mit dem Problem der unerwünschten Verformung der Hülsenpartie. Um die unerwünschte Verformung zu verhindern, schlägt dieses Patent vor, ganz vorne, im Bereich der Spitze der Hülsenpartie eine tief eingestochene radiale Ringnut in die Passfläche einzubringen, welche die eigentliche Passfläche in ihrem vorderen Bereich begrenzt. Dem liegt die Idee zu Grunde, dass sich der auf diese Art und Weise geschwächte Bereich an der Spitze der Hülsenpartie ungehindert in radialer Richtung aufdehnen kann und so verhindert, dass sich die Hülsenpartie im Bereich ihrer Spitze allzu weit nach innen stülpt. Man kann also grob sagen, dass der DE 102 44 759 das Konzept zu Grunde liegt, dem unerwünschten Nachinnenstülpen der Hülsenpartie im Bereich ihrer Spitze einen gegenläufigen Effekt zu überlagern.

Zusätzlich wird vorgeschlagen, die Passfläche an ihrem einwärtigen, dem Werkzeug abgewandten Ende, durch eine weitere Ringnut zu begrenzen. Die eigentliche Passfläche, die dieses Patent als "Hauptspannfläche 13" bezeichnet, wird bei der von diesem Patent vorgeschlagenen Lösung jedoch nicht durch ringförmige Einstiche unterbrochen, sondern lediglich an beiden Enden durch die Ringnuten berandet.

Weitere Abhilfe sollen nach dem Vorschlag dieses Patents nötigenfalls zusätzliche, in axialer Richtung verlaufende Nuten bringen, die die Passfläche bzw. Hauptspannfläche in einzelne federnde Segmente aufteilen, die eine Art Federlamellen bilden, welche in Umfangsrichtung nebeneinander liegen.

Die von diesem Patent vorgeschlagenen Maßnahmen reichen jedoch gerade bei Werkzeughaltern mit dickwandigen Hülsenpartien nicht aus, bzw. führen, soweit zusätzlich die von dem Patent vorgeschlagenen axialen Nuten verwendet werden, um das Problem des Verzugs der Hülsenpartie zu beherrschen, zu einem Verlust an Genauigkeit und schwächen den Presssitz zudem. Hinzu kommt, dass gerade im vordersten Bereich der Hülsenpartie die größten Kräfte übertragen werden (Biegemomente und Querkräfte vom Werkzeug). Eine Schwächung der Hülsenpartie in diesem Bereich vermindert die Steifigkeit daher auch sehr stark, wenn keine axialen Nuten verwendet werden und sollte daher vermieden werden.

Auch die deutsche Patentanmeldung DE 10 2004 042 770 beschreibt einen Werkzeughalter mit einer Hülsenpartie, in die der Schaft eines Werkzeugs eingeschrumpft werden kann. Die Passfläche, mit der die Hülsenpartie dieses Werkzeughalters auf ihrer Innenseite zu diesem Zweck versehen ist, wird durch eine Reihe eng beabstandeter Einstiche unterbrochen und in einzelne sehr schmale Segmente aufgeteilt. Sinn dieser Aufteilung der Passfläche in einzelne kleine Segmente ist es, die kleinen Segmente jeweils zu einer Art Widerhaken zu machen, die einem ungewollten Herausziehen des Werkzeugschafts in axialer Richtung einen erhöhten Widerstand entgegensetzen. Denn die kleinen Segmente sind, grob zusammengefasst, so konzipiert, dass sie auf Grund der Haftreibung vom Werkzeugschaft mitgenommen werden, wenn dieser ein kleines Stück weit in axialer Richtung herausgezogen wird. Da diese kleinen Segmente biegeweich sind, stellen sie sich im Zuge dessen auf und vergrößern so die Pressung zwischen der Hülsenpartie und den Schaft des Werkzeugs. Auf diese Art und Weise wird also eine Art Selbsthemmung realisiert.

Da die Hülsenpartien der von dieser Patentanmeldung gezeigten Werkzeughalter augenscheinlich nur die übliche Wandstärke aufweisen haben die hier verwendeten Einstiche keinen spürbaren Einfluss auf das Dehnungsverhalten der Hülsenpartie beim Erhitzen. Denn bei dünnen Wandstärken wird der noch kalte innere Bereich durch den bereits heißen äußeren Bereich "mitgezogen", d. h. so oder so hinreichend weit aufgedehnt, um den Werkzeugschaft ungestört ein- und vor allem auch wieder ausbauen zu können.

Naturgemäß ist eine solche Konstruktion, bei der die Passfläche in der Hülsenpartie in lauter kleine, biegeweiche Segmente aufgeteilt ist, nicht besonders starr.

Demgegenüber ist es die Aufgabe der Erfindung, einen Werkzeughalter anzugeben, dessen Hülsenpartie dickwandig ausgeführt werden kann und der eine ausgesprochen starre Einspannung des Werkzeugs bei hoher Güte der Zentrierung erlaubt.

Diese Aufgabe wird mit den Merkmalen des Anspruchs 1 gelöst.

Demgemäß liegt ein wesentlicher Aspekt der Erfindung insbesondere darin, dass die Hülsenpartie von Seiten der Passfläche her eine begrenzte Anzahl umlaufender Einstiche aufweist, die die Passfläche in mehrere in Achsrichtung im Wesentlichen in sich steife Passflächensegmente unterteilen. Dabei ist die radiale Tiefe der Einstiche so gewählt, dass sich der Presssitz unter dem Einfluss der über den Außenumfang der Hülsenpartie applizierten Wärme an allen Passflächensegmenten im Wesentlichen gleichmäßig löst.

Erfindungsgemäß ist die Passfläche also in einzelne, im Regelfall voneinander im Wesentlichen entkoppelte Segmente unterteilt. Dabei wird die Passfläche nicht nur in ein hauptsächlich für die Erzeugung des Pressverbundes verantwortliches Passflächensegment und ein kleines Passflächensegment unterteilt, welches nur einen untergeordneten Beitrag leistet. Stattdessen wird die Passfläche in mehrere Passflächensegmente aufgeteilt, die jeweils mit im Wesentlichen miteinander vergleichbaren Haltekräften zur Herstellung des Pressverbundes beitragen. Im Wesentlichen miteinander vergleichbar sind solche Beiträge, die sich um nicht mehr als 40 % unterscheiden. Vorzugsweise ist es sogar so, dass sich die Haltekräfte, die von jedem der Passflächensegmente erzeugt werden, praktisch nicht voneinander unterscheiden. Dies schließt natürlich nicht aus, dass zusätzlich auch einzelne Passflächensegmente vorhanden sein können, die nur einen untergeordneten Beitrag leisten.

Dabei ist der Abstand der einzelnen Einstiche voneinander so groß, dass die Passflächensegmente in Achsrichtung gesehen im Wesentlichen in sich steif sind. Die Passflächensegmente bilden also in Achsrichtung gesehen eine Art "steifer Blöcke", die sich nicht wesentlich verformen, wenn axiale Kräfte am Werkzeugschaft auftreten, die die Tendenz haben, den Werkzeugschaft aus der Hülsenpartie herauszuziehen oder tiefer in sie hinein zu stoßen. Auf diese Art und Weise wird der Werkzeugschaft ausgesprochen starr in der Hülsenpartie des Werkzeughalters eingespannt.

Wie groß die radiale Tiefe der Einstiche gewählt werden muss, damit sich der Presssitz unter dem Einfluss der über den Außenumfang der Hülsenpartie applizierten Wärme an allen Passflächensegmenten im wesentlichen gleichmäßig löst, lässt sich mit allgemeiner Gültigkeit nicht beziffert sagen, da die Tiefe der Einstiche maßgeblich vom Einzelfall abhängt, insbesondere von der Wandstärke der Hülsenpartie und dem Nenndurchmesser des zu spannenden Werkzeugschafts bzw. dem Verhältnis dieser beiden Größen. Der Fachmann kann dies jedoch durch einfache Versuche ohne Weiteres für den jeweiligen, von ihm konkret zu lösenden Einzelfall herausfinden. Ein im Wesentlichen gleichmäßiges Lösen liegt vor, wenn sich die Presssitze, die die einzelnen Passflächensegmente bei kalter Hülsenpartie mit dem Werkzeugschaft eingehen, nach bestimmungsgemäßer Hitzeapplikation auf den Außenumfang der Hülsenpartie im Wesentlichen gleichzeitig lösen, so dass das Herausziehen des Werkzeugschafts aus der Hülsenpartie nicht länger durch ein einzelnes Passflächensegment behindert wird, an dem sich der Presssitz noch nicht gelöst hat.

Bei Verwendung der erfindungsgemäßen Gestaltung der Hülsenpartie kann man die Vorteile einer dickwandigen Hülsenpartie mit dem vorteilhaften thermischen Verhalten einer dünnwandigen Hülsenpartie kombinieren - die tief eingestochenen Einstiche sind nur schmal und reduzieren daher den Torsionswiderstand bzw. die Biegesteifigkeit der Hülsenpartie nicht wesentlich. Dies, zumal die Hülsenpartie ja mit dem Werkzeugschaft eine Einheit bildet, die, solange der Pressverbund besteht, gemeinsam ein hohes Flächenträgheitsmoment besitzt. Andererseits wird durch die tief eingestochenen Einstiche genau der innenliegende Kernbereich der Hülsenpartie geschwächt, den die von außen aufgebrachte Wärme erst sehr spät erreicht und der daher, solange keine Einstiche vorhanden sind, die Dehnung der Hülsenpartie in axialer Richtung behindert - wodurch sich der störende Verzug der Hülsenpartie ergibt, den es erfindungsgemäß zu vermeiden bzw. zu minimieren gilt.

Die Verwendung einer Hülsenpartie mit hoher Wandstärke und erfindungsgemäßer Ausgestaltung ist insbesondere beim Einspannen von Fräsern vorteilhaft, insbesondere solchen, mit denen harte oder aus anderen Gründen nur schwer zu zerspanende Werkstoffe bearbeitet werden sollen. Denn gerade bei solchen Werkstoffen treten leicht unerwünschte Schwingungen auf, insbesondere an den Rändern des Werkstücks. Diese Schwingungen treten insbesondere dann auf, sobald nur noch wenige aufeinanderfolgende Schneiden des Fräsers gleichzeitig im Eingriff mit dem Werkstück sind, oder die Zahl der mit dem Werkstück in Eingriff befindlichen Schneiden des Fräsers schwankt. Hinzu kommt, dass die Einstiche, wenn sie mit der hier zur Diskussion stehenden Tiefe ausgeführt werden, auch einen schwingungsdämpfenden Effekt besitzen, da auf Grund der mehr als nur unwesentlich tiefen Unterbrechungen in der Hülsenpartie Schwingungen schlechter übertragen werden.

Die Erfindung gestattet es darauf zu verzichten, das Untermaß der Passung zu reduzieren, um ein problemloses Ein- und Ausspannen zu gewährleisten - es muss also keine Reduktion der Spannkraft hingenommen werden, um in den Genuss eines einfachen Ein- und Ausschrumpfens zu kommen.

Im Rahmen einer bevorzugten Ausführungsform ist vorgesehen, dass die Passfläche in mindestens zwei, vorzugsweise drei bis fünf miteinander vergleichbare Passflächensegmente unterteilt ist, je nach axialer Länge der Passfläche. Die Aufteilung der Passfläche in eine größere Zahl von Passflächensegmenten ist nur wenig sinnvoll, weil die Schwächung und der Fertigungsaufwand zu groß werden. Allenfalls dann, wenn man unter Inkaufnahme einer gewissen Verschlechterung an eine patentrechtliche Umgehungslösung denkt, könnte man im Extremfall auch eine Aufteilung in sechs bis maximal acht Passflächensegmente in Betracht ziehen.

Um einen Werkzeughalter mit sehr starrer Einspannung des Werkzeugschafts zu realisieren, führt man die kleinste Wandstärke der Hülsenpartie im Bereich der Passfläche (also in dem Bereich, der in radialer Richtung gesehen auswärts neben der Passfläche liegt) mit mindestens 15 mm aus, besser noch mit mindestens 17, z. T. auch mit mindestens 19 mm aus.

Im Rahmen einer weiteren vorteilhaften Ausführungsform ist vorgesehen, dass der Abstand des der stirnseitigen Ringfläche am nächsten liegenden Einstichs vom inneren Ende der stirnseitigen Fase mehr als 8 mm, besser mehr als 10 mm beträgt. Weitere Vorteile, Wirkungen und Ausgestaltungsmöglichkeiten ergeben sich aus dem nachfolgend beschriebenen Ausführungsbeispiel, welches anhand der maßstäblich gezeichneten und bemaßten Figur näher erläutert wird, deren zeichnerischer Offenbarungsgehalt für das Ausführungsbeispiel wesentlich ist.

Es zeigen:
Die Figur 1 eine grob schematische Darstellung des Verformungsverhaltens der im Stand der Technik bekannten Werkzeughalter im Bereich ihrer Hülsenpartie.
Die Figur 2 ein detailliertes Ausführungsbeispiel eines erfindungsgemäßen Werkzeughalters.

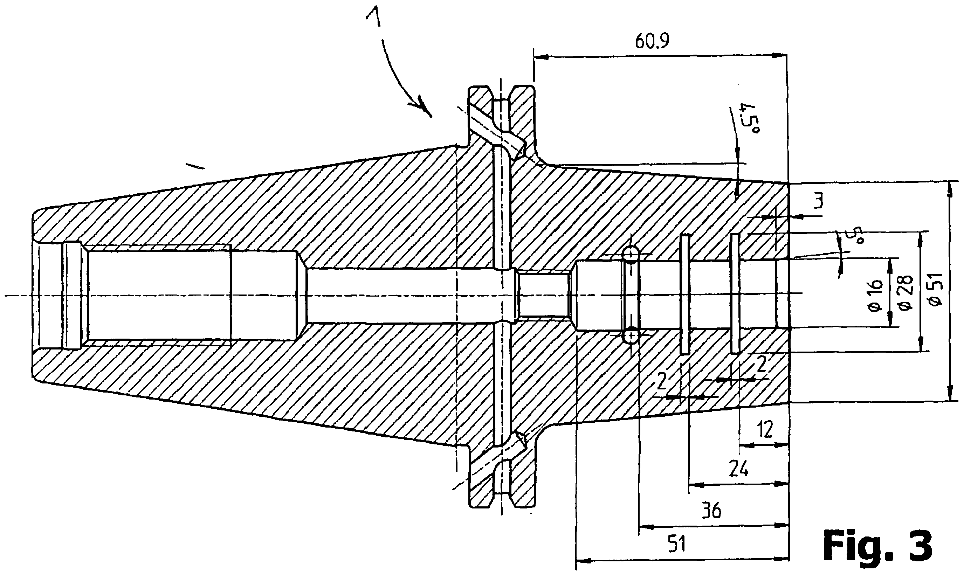

Die Figur 3 den Werkzeughalter gemäß Fig. 2, jedoch mit konkreter Bemaßung der für die Ausführung der Erfindung relevanten Partien.

Der von Figur 1, wie beansprucht ohne das eingesetzte Werkzeug gezeigte, stählerne Werkzeughalter ist im Großen und Ganzen ein Werkzeughalter üblicher Bauart. An seiner der Hülsenpartie 2 abgewandten Seite ist er mit einem Spannkegel versehen, mittels dessen er an einer Spindel einer Werkzeugmaschine befestigt werden kann. Statt eines Spannkegels kommen ohne Weiteres auch die anderen, als Alternative für eine Befestigung eines Werkzeughalters an einer Spindel einer Werkzeugmaschine einschlägig bekannten Spannsysteme in Betracht.

Auf seiner anderen, dem Spannkegel gegenüberliegenden Seite ist der Werkzeughalter 1 mit einer Hülsenpartie 2 versehen. Letztere weist eine Werkzeugaufnahmeöffnung 3 auf, die hier aus einer zylindrischen Öffnung besteht. Diese ist über einen Teil ihrer inneren Oberfläche hinweg mit einer Passfläche 4 ausgestattet. Diese Passfläche 4 hat gegenüber dem Schaftdurchmesser des zu spannenden Werkzeugs ein definiertes Untermaß, so dass der Schaft des Werkzeugs bei kalter Hülsenpartie im Presssitz gehalten wird. In Folge dessen können alle beim Betrieb des Werkzeugs an diesem auftretenden Kräfte über den Presssitz in den Werkzeughalter 1 und von dort aus in die Werkzeugmaschine geleitet werden - und umgekehrt. Das Ein- und vor allem das Ausschrumpfen eines Werkzeugs in bzw. aus dem Werkzeughalter 1 erfolgt in der Praxis regelmäßig so, wie in der vorveröffentlichten deutschen Patentanmeldung DE 101 02 710 A1 beschrieben, die hiermit im Wege des Verweises zum Gegenstand der Beschreibung gemacht wird.

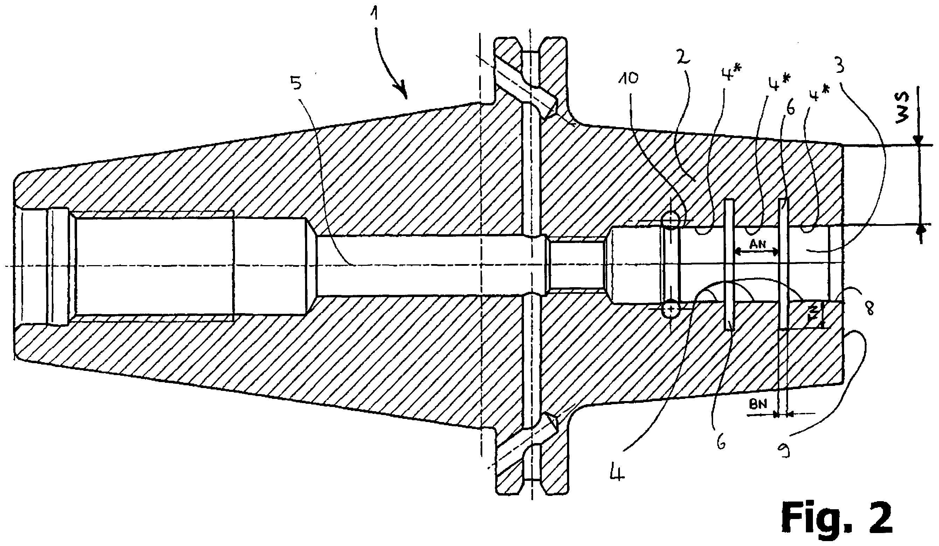

Die Hülsenpartie 2 ist hier vergleichsweise dickwandig ausgeführt. Bei dem von Fig. 2 gezeigten Ausführungsbeispiel, das dazu dient um ein Werkzeug mit einem Schaftdurchmesser von 16 mm zu spannen, beträgt die minimale Wandstärke WS der Hülsenpartie im Bereich der Passfläche etwas mehr als 17,5 mm.

Die Mündung der Werkzeugaufnahmeöffnung 3 ist mit einer großzügigen Fase versehen, also einem Abschnitt, der noch nicht Bestandteil der Passfläche 4 ist, sondern mit seinem vergrößerten Durchmesser das Einführen des jeweiligen Werkzeugschafts erleichtert.

Im Anschluss an diese Fase beginnt die Passfläche 4, die bei dem gezeigten Ausführungsbeispiel durch zwei in Umfangsrichtung umlaufende Einstiche 6 in insgesamt drei Passflächensegmente 4* unterteilt ist. Die Einstiche 6 sind von der Seite der Passfläche her in die Hülsenpartie eingestochen. Die Tiefe der Einstiche 6 beträgt 6 mm. Vorzugsweise ist sie bei allen Einstichen einheitlich. Die Hülsenpartie im Bereich der Passfläche wird durch jeden der Einstiche auf knapp 1/3 ihrer Wandstärke geschwächt, wobei die Schwächung im Regelfall jedenfalls mehr als 1/4 und weniger als 1/2 der Wandstärke betrifft.

Die Breite der Einstiche in axialer Richtung beträgt idealerweise 1,5 bis 3 mm, im konkreten Fall 2 mm.

Die so entstehenden Passflächensegmente 4* weisen in axialer Richtung im Wesentlichen die gleiche Länge auf. Sie leisten auf diese Art und Weise in etwa vergleichbare Kraft-Beiträge zum Pressverbund, d. h. Beiträge ähnlicher Größenordnung - gewisse Unterschiede in den Beiträgen sind dabei schon deswegen gleichermaßen unvermeidlich wie unschädlich, da die Hülsenpartie im Bereich der Passfläche eine um etwa 3 bis 6 Grad zur Drehachse des Werkzeughalters konische Außenkontur aufweist, also keine vollkommen konstante Wandstärke besitzt.

In axial-einwärtiger Richtung schließt sich bei dem von Fig. 2 gezeigten Ausführungsbeispiel an die Passfläche 4 bzw. das letzte Passflächensegment 4* eine Verriegelung an, dahinter läuft die Werkzeugaufnahme aus. Weder der Auslaufbereich noch der Verriegelungsmechanismus sind Teil der Passfläche 4 oder gar der Erfindung und interessieren daher nicht.

Auch bei Werkzeughaltern, mit denen Werkzeuge mit größeren Schaftdurchmessern gespannt werden sollen, sind ähnliche Verhältnisse anzutreffen, wie vorgehend für die maßgeblichen Eckgrößen des konkreten Ausführungsbeispiels geschildert, vgl. die am Ende der Beschreibung aufgeführte Tabelle.

In dieser Tabelle sind die Eckgrößen anderer Werkzeughalter angegeben, bei denen die Passfläche jeweils ebenfalls in drei Passflächensegmente unterteilt ist.

| **Schaft-Ø [mm]** | **minimale Wandstärke WS der Hülse [mm]** | **Einstichtiefe ET [mm]** | **Axiale Länge L der Passflächensegmente [mm]** |
|---|---|---|---|
| 40 | 21 | 8 | 18 mm bis 28 mm |
| 32 | 19 | 6 | 11 mm bis 15 mm |
| 25 | 19 | 6 | 11 mm bis 15 mm |
| 20 | 19 | 6 | 10 mm bis 13 mm |
| 16 | 17,5 | 6 | 10 mm bis 13 mm |

- 1: Werkzeughalter
- 2: Hülsenpartie
- 3: Werkzeugaufnahmeöffnung
- 4: Passfläche
- 4*: einzelnes Passflächensegment
- 5: Drehachse des Werkzeughalters
- 6: ringförmig umlaufender Einstich
- 7: nicht vergeben
- 8: stirnseitige Fase
- 9: stirnseitige Ringfläche
- 10: inneres Ende der Passfläche

- ET: Tiefe des Einstichs
- BN: Breite des Einstichs
- AN: Abstand der Einstiche untereinander
- WS: Wandstärke

## Patentansprüche

1. Werkzeughalter (1) mit einer Werkzeugaufnahme in Form einer Hülsenpartie (2), welche eine Werkzeugaufnahmeöffnung (3) mit einer zur Drehachse (5) des Werkzeughalters (1) konzentrischen Passfläche (4) aufweist, an der der Schaft eines bestimmungsgemäß in die Werkzeugaufnahmeöffnung (3) der Hülsenpartie (2) eingesetzten Werkzeugs im Presssitz festgesetzt werden kann, wobei die Hülsenpartie (2) von Seiten der Passfläche (4) her eine Anzahl umlaufender Einstiche (6) aufweist, wobei die Einstiche (6) die Passfläche (4) in zwei bis maximal acht miteinander vergleichbare, in Achsrichtung in sich steife Passflächensegmente (4*) unterteilen, die steife Blöcke bilden, welche sich nicht verformen, wenn axiale Kräfte am Werkzeugschaft auftreten, die die Tendenz haben, den Werkzeugschaft aus der Hülsenpartie herauszuziehen oder tiefer in sie hinein zu stoßen wobei die radiale Tiefe (ET) der Einstiche (6) in Abhängigkeit von der Wandstärke der Hülsenpartie (2) und dem Nenndurchmesser des zu spannenden Werkzeugschafts bzw. dem Verhältnis dieser beiden Größen so gewählt ist, dass sich die Presssitze, die die einzelnen Passflächensegmente (4*) bei kalter Hülsenpartie (2) mit dem Werkzeugschaft eingehen, bei Hitzeapplikation auf den Außenumfang der Hülsenpartie (2) gleichzeitig lösen, so dass das Herausziehen des Werkzeugschafts aus der Hülsenpartie (2) nicht durch ein einzelnes Passflächensegment (4*) behindert wird, an dem sich der Presssitz noch nicht gelöst hat **dadurch gekennzeichnet, dass** die Einstiche die Hülsenparte über mehr als ¼ und über weniger als ½ der Wandstärke (WS) der Hülsenpartie (2) schwächen.

2. Werkzeughalter (1) nach einem der vorhergehenden Ansprüche, **dadurch gekennzeichnet, dass** die Wandstärke (WS) der Hülsenpartie (2) im Bereich der Passfläche (4) mindestens 15 mm beträgt.

3. Werkzeughalter (1) nach einem der vorhergehenden Ansprüche, **dadurch gekennzeichnet, dass** die Einstichtiefe (ET) mindestens 4 mm, vorzugsweise 6 mm und mehr beträgt.

4. Werkzeughalter nach einem der vorhergehenden Ansprüche, **dadurch gekennzeichnet, dass** die Länge der einzelnen Passflächensegmente in axialer Richtung zwischen 10 und 30 mm beträgt.

5. Werkzeughalter (1) nach einem der vorhergehenden Ansprüche, **dadurch gekennzeichnet, dass** der Abstand des der stirnseitigen Ringfläche (9) am nächsten liegenden Einstichs (6) vom inneren Ende der stirnseitigen Fase (8) mindestens dem Vierfachen der Einstichbreite (BN), idealerweise mindestens dem Sechsfachen der Einstichbreite (BN) entspricht.

6. Werkzeughalter (1) nach einem der vorhergehenden Ansprüche, **dadurch gekennzeichnet, dass** der Abstand des der stirnseitigen Ringfläche (9) am entferntesten liegenden Einstichs (6) vom inneren Ende (10) der Passfläche mindestens dem Vierfachen der Einstichbreite (BN) entspricht.

## Claims

1. A tool holder (1) comprising a tool-accommodating fixture in the shape of a sleeve section (2) having a tool-accommodating aperture (3) with a fitting surface (4) which is concentric with the axis of rotation (5) of the tool holder (1) and to which the shank of a tool inserted into the tool-accommodating aperture (3) of the sleeve section (2) as intended can be fixed in a press fit, wherein the sleeve section (2) comprises, from the side of the fitting surface (4), a number of peripherally extending cuts (6), wherein the cuts (6) divide the fitting surface (4) into two to a maximum of eight mutually comparable fitting surface segments (4*), which are rigid in themselves in the direction of the axis and which form rigid blocks that do not deform if axial forces, which have the tendency to pull out the tool shank from the sleeve section or to force it deeper into it, arise at the tool shank, wherein the radial depth (ET) of the cuts (6) is selected such, depending on the wall thickness of the sleeve section (2) and the nominal diameter of the tool shank to be chucked or the ratio between these two quantities, that the press fits, which the individual fitting surface segments (4*) engage into with the tool shank when the sleeve section (2) is cold, loosen simultaneously when heat is applied to the outer circumference of the sleeve section (2), so that pulling the tool shank out from the sleeve section (2) is no longer impeded by a single fitting surface segment (4*) at which the press fit has not yet loosened, **characterized in that** the cuts weaken the sleeve section over more than 1/4 and over less than 1/2 of the wall thickness (WS) of the sleeve section (2).

2. The tool holder (1) according to any one of the preceding claims, **characterized in that** the wall thickness (WS) of the sleeve section (2) in the area of the fitting surface (4) is at least 15 mm.

3. The tool holder (1) according to any one of the preceding claims, **characterized in that** the cut depth (ET) is at least 4 mm, preferably 6 mm and more.

4. The tool holder according to any one of the preceding claims, **characterized in that** the length of the individual fitting surface segments in the axial direction is between 10 mm and 30 mm.

5. The tool holder (1) according to any one of the preceding claims, **characterized in that** the distance of the cut (6) closest to the frontal ring surface (9) from the inner end of the frontal chamfer (8) corresponds to at least four times the cut width (BN), ideally to at least six times the cut width (BN).

6. The tool holder (1) according to any one of the preceding claims, **characterized in that** the distance of the cut (6) furthest from the frontal ring surface (9) from the inner end (10) of the fitting surface corresponds to at least four times the cut width (BN).

## Revendications

1. Porte-outil (1) pourvu d'un logement à outil sous la forme d'une partie en douille (2) qui présente une ouverture de logement d'outil (3) pourvue d'une surface d'ajustement (4) concentrique par rapport à l'axe de rotation (5) du porte-outil (1), surface sur laquelle peut être immobilisée par ajustement serré la tige d'un outil mis en place conformément à sa destination dans l'ouverture de logement d'outil (3) de la partie en douille (2), la partie en douille (2) présentant un certain nombre d'entailles périphériques (6) depuis le côté de la surface d'ajustement (4),
dans lequel les entailles (6) subdivisent la surface d'ajustement (4) en deux à huit segments de surface d'ajustement (4*) au maximum, comparables entre eux et rigides en soi en direction axiale, qui forment des blocs rigides qui ne se déforment pas lorsque des forces axiales apparaissent sur la tige de l'outil, qui ont tendance à extraire la tige de l'outil hors de la partie en douille ou à l'enfoncer plus profondément dans celle-ci, la profondeur radiale (ET) des entailles (6) étant choisie en fonction de l'épaisseur de paroi de la partie en douille (2) et du diamètre nominal de la tige d'outil à serrer ou en fonction du rapport entre ces deux grandeurs, de telle sorte que les ajustements serrés que réalisent les segments de surface d'ajustement individuels (4*) avec la tige de l'outil lorsque la partie en douille est froide se désolidarisent simultanément lorsqu'une chaleur est appliquée sur la périphérie extérieure de la partie en douille (2), de telle sorte que l'extraction de la tige d'outil hors de la partie en douille (2) n'est pas empêchée par un segment de surface d'ajustement (4*) individuel au niveau lequel l'ajustement serré n'est pas encore désolidarisé,
**caractérisé en ce que**
les entailles de la partie en douille affaiblissent la partie en douille (2) sur plus de ¼ et moins de ½ de l'épaisseur de paroi (WS) de la partie en douille (2).

2. Porte-outil (1) selon la revendication précédente, **caractérisé en ce que** l'épaisseur de paroi (WS) de la partie en douille (2) s'élève à au moins 15 mm dans la zone de la surface d'ajustement (4).

3. Porte-outil (1) selon l'une des revendications précédentes, **caractérisé en ce que** la profondeur d'entaille (ET) s'élève à au moins 4 mm, de préférence à 6 mm et plus.

4. Porte-outil selon l'une des revendications précédentes, **caractérisé en ce que** la longueur des segments de surface d'ajustement individuels en direction axiale est comprise entre 10 et 30 mm.

5. Porte-outil (1) selon l'une des revendications précédentes, **caractérisé en ce que** la distance de l'entaille (6) la plus proche de la surface annulaire frontale (9), depuis l'extrémité intérieure du chanfrein frontal (8), est au moins quatre fois plus élevée que la largeur d'entaille (BN), idéalement au moins six fois plus élevée que la largeur d'entaille (BN).

6. Porte-outil (1) selon l'une des revendications précédentes, **caractérisé en ce que** la distance de l'entaille (6) la plus éloignée de la surface annulaire frontale (9), depuis l'extrémité intérieure (10) de la surface d'ajustement est au moins quatre fois plus élevée que la largeur d'entaille (BN).
